# EUROPEAN PATENT APPLICATION

(11) **EP 4 481 245 A1**
(43) Date of publication of application: **25.12.2024**
(21) Application number: 22926660.6
(22) Date of filing: 22.06.2022
(51) Int. Cl.: F16K 11/22, F16K 27/00

(54) **MANUAL AND SENSOR INTEGRATED KITCHEN TAP AND CONTROL METHOD**

(30) Priority: 16.02.2022 CN 202210143080
(71) Applicant: Ningbo Geagle Intelligent Kitchen & Bath Tech Co., Ltd., Ningbo, Zhejiang 315033 (CN)
(72) Inventor: YING, Jun, Ningbo, Zhejiang 315033 (CN); ZHANG, Xiaoyong, Ningbo, Zhejiang 315033 (CN)
(74) Representative: Cabinet Chaillot
(86) International application number: PCT/CN2022/100314
(87) International publication number: WO 2023/155351

(57) **Abstract**

A manual and sensor integrated kitchen faucet includes a valve seat, water outlet nozzle, and infrared sensor. The valve seat has cold and hot water inlets. The manual temperature adjustment valve core is on one side, while the sensor temperature adjustment valve core is on the other side. The valve seat has manual and sensor water outlet holes. The manual valve core mixes water from the inlets and outputs it to the manual outlet hole. The sensor valve core does the same for the sensor outlet hole. Both outlet holes are connected to the water nozzle, with an electromagnetic valve between the sensor hole and the nozzle. The infrared sensor receives signals and controls the electromagnetic valve. This application is compact, allowing both manual and automatic water outlets with temperature control.

## Description

### TECHNICAL FIELD

The present application relates to the technical field of faucets, and more particularly, to a manual and sensor integrated kitchen faucet and control method.

### BACKGROUND

Faucets have been widely used in water supply systems such as bathrooms and kitchens. There are various types of faucets on the market, roughly divided into manual and sensor types. Manual faucets are operated by manually opening or closing mechanical valves. Automatic faucets include sensor and touch types, which use infrared sensors or touch infrared sensors to receive triggering information and control the opening or closing of solenoid valves.

Among them, most kitchen faucets are manual, controlled by manually operating the handle to open or close and adjust the water temperature. However, when users handle fresh seafood or other potentially dirty items, directly touching the handle may contaminate it with dirt and bacteria. Therefore, automatic faucets will become a development trend. However, if the external touch infrared sensor or infrared sensor of the faucet is damaged and cannot sense external triggering information, it will seriously affect people's water use. To solve this problem, kitchen faucets that combine sensors and manual switches have been developed. However, most of them have complex structures, high costs, large sizes, are not conducive to miniaturization, and are inconvenient to use. Additionally, they cannot adjust the water temperature.

### SUMMARY

To address the shortcomings and defects of the existing technology, a manual and sensor integrated kitchen faucet and control method thereof are provided. The application has a compact structure, can achieve manual and automatic sensing water output, and also has a temperature adjustment function, resulting in a good user experience.

To achieve the above objectives, the present application provides the following technical solution.

A manual and sensor integrated kitchen faucet includes a valve seat, a water outlet nozzle, and an infrared sensor. The valve seat is provided with a cold water inlet and a hot water inlet for connecting to cold water and hot water. One side of the valve seat is installed with a manual water output temperature adjustment valve core, and the other side of the valve seat is installed with a sensor water output temperature adjustment valve core. The valve seat is provided with a manual water output hole in cooperation with the manual water output temperature adjustment valve core, and a sensor water output hole in cooperation with the sensor water output temperature adjustment valve core. The manual water output temperature adjustment valve core mixes the water discharged from the cold water inlet and the hot water inlet and outputs it to the manual water output hole, while the sensor water output temperature adjustment valve core mixes the water discharged from the cold water inlet and the hot water inlet and outputs it to the sensor water output hole. The manual water output hole and the sensor water output hole are connected to the water outlet nozzle respectively, and an electromagnetic valve is further provided between the sensor water output hole and the water outlet nozzle. The infrared sensor receives signals and controls the operation of the electromagnetic valve.

The beneficial effects of the present application are as follows: The manual and sensor integrated kitchen faucet of the present application is equipped with a manual water output temperature adjustment valve core and a sensor water output temperature adjustment valve core on the valve seat. It also sets up manual cold water flow channel, manual hot water flow channel, sensor cold water flow channel, and sensor hot water flow channel. During operation, cold water enters through the cold water inlet and then enters the manual water output temperature adjustment valve core through the manual cold water flow channel. It enters the sensor water output temperature adjustment valve core through the sensor cold water flow channel. Hot water enters through the hot water inlet and then enters the manual water output temperature adjustment valve core through the manual hot water flow channel. It enters the sensor water output temperature adjustment valve core through the sensor hot water flow channel. The manual water output temperature adjustment valve core and the sensor water output temperature adjustment valve core control the proportion of cold water and hot water to achieve temperature adjustment. When manual water output is required, the manual control valve core is operated to connect the manual water output hole with the water outlet nozzle for water output. When sensor water output is required, the infrared sensor receives the sensor signal and controls the electromagnetic valve to open, connecting the sensor water output hole with the water outlet nozzle for water output. The overall structure is compact, easy to install and use, and has a temperature adjustment function while considering both manual and sensor water output modes.

As an improvement of the present application, the valve seat is an integral molded structure, including a valve body, a first valve seat located on one side of the valve body, and a second valve seat located on the other side of the valve body. The cold water inlet and hot water inlet are set on the valve body, and the manual water temperature adjustment valve core is installed on the first valve seat, while the sensor water temperature adjustment valve core is installed on the second valve seat.

As an improvement of the present application, the valve body is equipped with a manual cold water flow channel that is connected to the cold water inlet and the manual water temperature adjustment valve core, and a sensor cold water flow channel that is connected to the cold water inlet and the sensor water temperature adjustment valve core. Similarly, there is also a manual hot water flow channel connected to the hot water inlet and the manual water temperature adjustment valve core, and a sensor hot water flow channel connected to the hot water inlet and the sensor water temperature adjustment valve core. The manual water temperature adjustment valve core mixes the water flowing out from the manual cold water flow channel and the manual hot water flow channel, while the sensor water temperature adjustment valve core mixes the water flowing out from the sensor cold water flow channel and the sensor hot water flow channel.

As an improvement of the present application, the manual cold water flow channel is connected to the sensor cold water flow channel, and the manual hot water flow channel is connected to the sensor hot water flow channel. The cold water inlet is connected to the connection between the manual cold water flow channel and the sensor cold water flow channel, while the hot water inlet is connected to the connection between the manual hot water flow channel and the sensor hot water flow channel.

As an improvement of the present application, the manual cold water flow channel, sensor cold water flow channel, manual hot water flow channel, and sensor hot water flow channel are horizontally arranged, while the cold water inlet, hot water inlet, manual water outlet, and sensor water outlet are vertically arranged.

As an improvement of the present application, the valve seat is an integral molded structure.

As an improvement of the present application, it further includes a faucet body and a faucet bend pipe set above the faucet body. The valve seat is located inside the faucet body, the manual water temperature adjustment valve core is set on one side of the faucet body, and the adjustment water temperature adjustment valve core is set on the other side of the faucet body. The sensing area on the infrared sensor is set on the front side of the faucet bend pipe, and there is a sensing port on the front side of the faucet bend pipe.

As an improvement of the present application, the infrared sensor is installed inside the faucet bend pipe through a fixing cover, and the fixing cover is pre-installed with fastening screws. The faucet bend pipe has an operating hole that matches the fastening screws. The size of the operating hole is smaller than the size of the fastening screws. When the infrared sensor is installed on the faucet bend pipe through the fixing cover, the sensing area of the infrared sensor is exposed through the sensing port, and the position of the fastening screws matches the position of the operating hole. By operating the fastening screws through the operating hole, the fastening screws are brought into contact with the inner wall of the faucet bend pipe.

As an improvement of the present application, the faucet body is also equipped with a manual temperature adjustment knob that drives the manual water temperature adjustment valve core to rotate and move, and an adjustment temperature adjustment knob that drives the adjustment water temperature adjustment valve core to rotate.

As an improvement of the present application, there is a connecting tee between the manual water outlet, the adjustment water outlet, and the water outlet nozzle. The connecting tee has a first inlet connected to the manual water outlet, a second inlet connected to the adjustment water outlet, and an outlet connected to the water outlet nozzle. The solenoid valve is installed at the outlet.

A control method for a manual and automatic integrated kitchen faucet includes:
Dividing cold water and hot water into two paths through the valve seat, with one path of cold water and hot water flowing to the manual water temperature adjustment valve core, and the other path of cold water and hot water flowing to the adjustment water temperature adjustment valve core.

In manual mode, manually operate the manual water temperature adjustment valve core to open the manual mixing chamber, and the mixed cold water and hot water flow out through the water outlet nozzle.

In adjustment mode, when the infrared sensor receives the adjustment signal, the solenoid valve opens according to the adjustment signal, and the mixed cold water and hot water flow out through the water outlet nozzle.

As an improvement of the present application, in manual mode, adjust the ratio of cold water and hot water by operating the manual water temperature adjustment valve core to adjust the water temperature. In adjustment mode, adjust the ratio of cold water and hot water by operating the adjustment water temperature adjustment valve core to adjust the water temperature.

### BRIEF DESCRIPTION OF THE DRAWINGS

FIG. 1 is a schematic diagram of the overall structure of the present application.
FIG. 2 is a schematic diagram of the disassembled structure of the present application.
FIG. 3 is a partial sectional view of FIG. 1.
FIG. 4 is a sectional view of the infrared sensor in conjunction with the faucet bend pipe.
FIG. 5 is another angled sectional view of the infrared sensor in conjunction with the faucet bend pipe.
FIG. 6 is a schematic diagram of the valve seat in conjunction with the manual water temperature adjustment valve core and the sensor water temperature adjustment valve core.
FIG. 7 is a schematic diagram of the valve seat of the present application.
FIG. 8 is a sectional view of the valve seat of the present application.
FIG. 9 is a schematic diagram of the valve seat in another embodiment of the present application.
FIG. 10 is a schematic diagram of the overall structure of the present application with the valve seat structure of FIG. 9 applied.
FIG. 11 is a schematic diagram of the working principle of the present application.

1 Valve seat; 1.1 Cold water inlet; 1.2 Hot water inlet; 1.3 Manual cold water flow channel; 1.4 Sensor cold water flow channel; 1.5 Manual hot water flow channel; 1.6 Sensor hot water flow channel; 1.7 Manual water outlet hole; 1.8 Sensor water outlet hole; 1.9 Valve body; 1.10 First valve seat; 1.11 Second valve seat; 2 Manual water temperature adjustment valve core; 3 Sensor water temperature adjustment valve core; 4 Manual temperature adjustment knob; 5 Sensor temperature adjustment knob; 6 Water outlet nozzle; 7 Infrared sensor; 7.1 Fixing bolt; 7.2 Front fixing cover; 7.21 Installation groove; 7.3 Rear fixing cover; 7.4 Fixing screw; 8 Faucet body; 8.1 Faucet seat; 8.2 Left mounting portion; 8.3 Right mounting portion; 9 Faucet bend pipe; 9.1 Sensor port; 9.2 Operating port; 10 Solenoid valve; 11 Connecting tee; 12 Counterweight lead block; 13 Cold water inlet pipe; 14 Hot water inlet pipe; 15 Manual water outlet pipe; 16 Sensor water outlet pipe; 17 Main water outlet pipe.

### DETAILED DESCRIPTION OF THE EMBODIMENTS

Further explanation of the present application is provided in conjunction with the accompanying drawings.

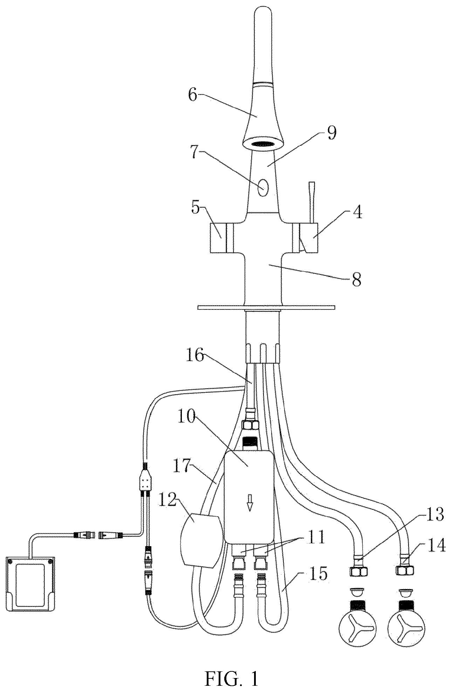

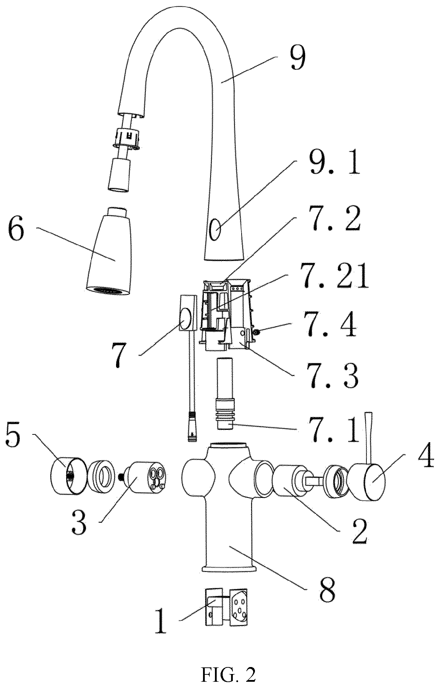

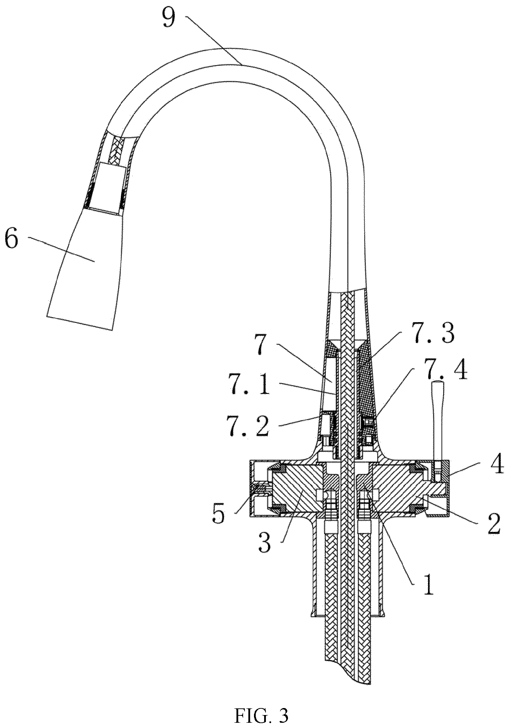

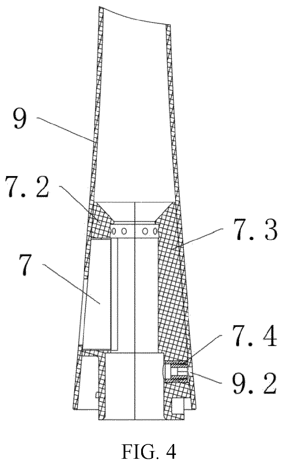

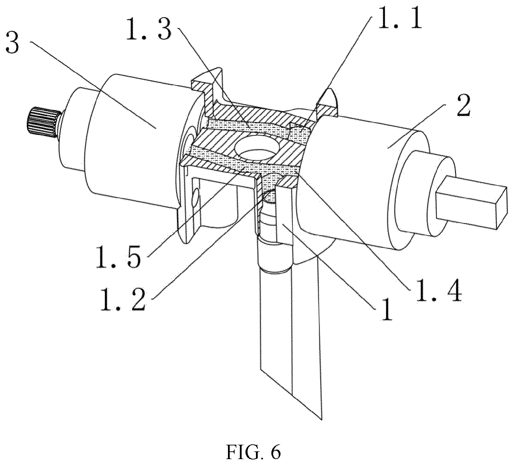

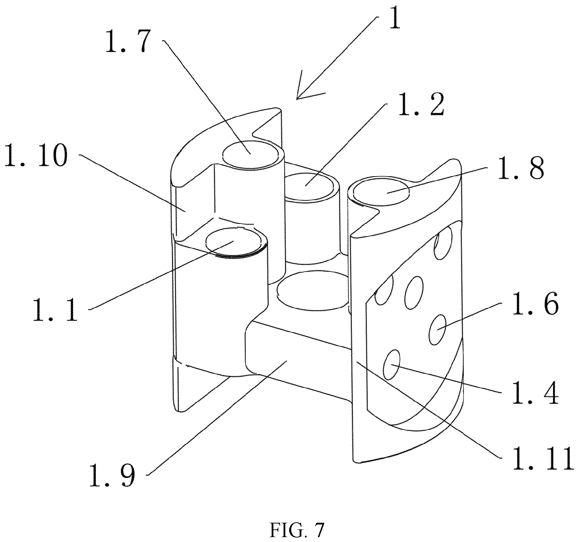

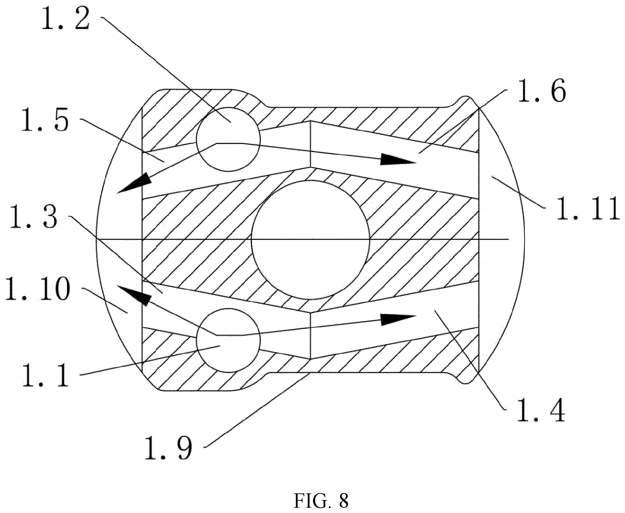

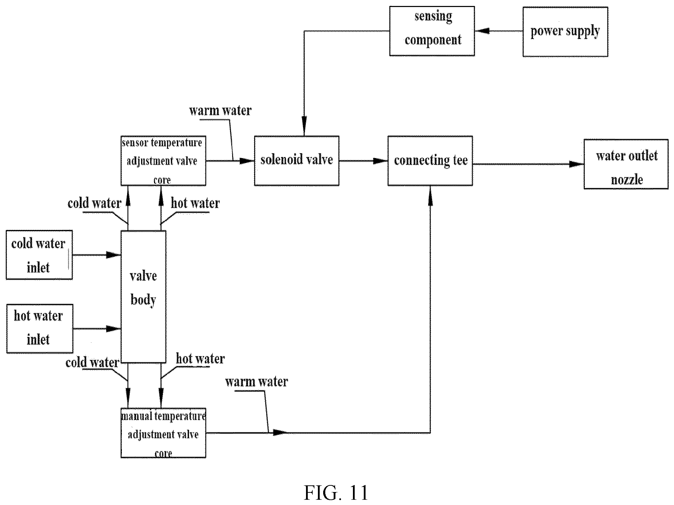

Referring to FIGs. 1 to 11, a manual and sensor integrated kitchen faucet is shown. The faucet includes a faucet body 8, a faucet bend pipe 9, a valve seat 1, a water outlet nozzle 6, an infrared sensor 7, and a connecting tee 11. The valve seat 1 is located inside the faucet body 8, and the faucet bend pipe 9 is positioned above the faucet body 8 with the water outlet nozzle 6 at its end.

The valve seat 1 is an integral molded structure and comprises a valve body 1.9, a first valve seat 1.10 located on one side of the valve body 1.9, and a second valve seat 1.11 located on the other side of the valve body 1.9.

The valve body 1.9 is provided with a cold water inlet 1.1 and a hot water inlet 1.2, both of which are located at the bottom of the valve seat 1. The cold water inlet 1.1 is connected to a cold water angle valve through a cold water inlet pipe 13 to allow cold water to enter, while the hot water inlet 1.2 is connected to a hot water angle valve through a hot water inlet pipe 14 to allow hot water to enter.

A manual water temperature adjustment valve core 2 is installed on the first valve seat 1.10, and a sensor water temperature adjustment valve core 3 is installed on the second valve seat 1.11. The first valve seat 1.10 is equipped with a manual mixing chamber to mix the water flowing out from the cold water inlet 1.1 and hot water inlet 1.2, while the second valve seat 1.11 is equipped with a sensor mixing chamber to mix the water from the cold water inlet 1.1 and hot water inlet 1.2.

Specifically, the valve body 1.9 is provided with a manual cold water flow channel 1.3 that communicates with the cold water inlet 1.1 and the manual water temperature adjustment valve core 2, a sensor cold water flow channel 1.4 that communicates with the cold water inlet 1.1 and the sensor water temperature adjustment valve core 3, a manual hot water flow channel 1.5 that communicates with the hot water inlet 1.2 and the manual water temperature adjustment valve core 2, and an sensor hot water flow channel 1.6 that communicates with the hot water inlet 1.2 and the sensor water temperature adjustment valve core 3. The manual cold water flow channel 1.3 is connected to the sensor cold water flow channel 1.4, and the manual hot water flow channel 1.5 is connected to the sensor hot water flow channel 1.6. The cold water inlet 1.1 is connected to the junction of the manual cold water flow channel 1.3 and the sensor cold water flow channel 1.4, while the hot water inlet 1.2 is connected to the junction of the manual hot water flow channel 1.5 and the sensor hot water flow channel 1.6. In other words, the manual cold water flow channel 1.3 is located on one side of the cold water inlet 1.1, and the sensor cold water flow channel 1.4 is located on the other side of the cold water inlet 1.1, while the manual hot water flow channel 1.5 is located on one side of the hot water inlet 1.2, and the sensor hot water flow channel 1.6 is located on the other side of the hot water inlet 1.2.

By rotating the manual water temperature adjustment valve core 2, the ratio of cold water and hot water entering the manual mixing chamber is adjusted to regulate the water temperature. The manual water temperature adjustment valve core 2 also controls the opening and closing of the manual mixing chamber and the water flow from the manual mixing chamber by moving. The sensor water temperature adjustment valve core 3, when rotated, adjusts the ratio of cold water and hot water entering the sensor mixing chamber to regulate the water temperature. The sensor mixing chamber remains in an always-open state.

The valve body 1.9 is also equipped with a manual water outlet hole 1.7 connected to the manual mixing chamber and a sensor water outlet hole 1.8 connected to the sensor mixing chamber. The water from the manual cold water flow channel 1.3 and manual hot water flow channel 1.5 is mixed in the manual mixing chamber and then outputted to the manual water outlet hole 1.7. Similarly, the water from the sensor cold water flow channel 1.4 and sensor hot water flow channel 1.6 is mixed in the sensor mixing chamber and then outputted to the sensor water outlet hole 1.8. Both the manual water outlet hole 1.7 and the sensor water outlet hole 1.8 are connected to the water outlet nozzle 6 through pipelines.

In this embodiment, the manual cold water flow channel 1.3, sensor cold water flow channel 1.4, manual hot water flow channel 1.5, and sensor hot water flow channel 1.6 are all horizontally arranged. The axis of the cold water inlet 1.1 and the axis of the hot water inlet 1.2 are vertically arranged, perpendicular to the horizontal direction. The inlet axis of the manual water outlet hole 1.7 and the inlet axis of the sensor water outlet hole 1.8 are horizontally arranged, while the outlet axis of the manual water outlet hole 1.7 and the outlet axis of the sensor water outlet hole 1.8 are vertically arranged.

In terms of the position on the valve seat 1, the cold water inlet 1.1, hot water inlet 1.2, manual water outlet hole 1.7, and sensor water outlet hole 1.8 are all located at the bottom of the valve seat 1. The valve seat 1 has a horizontally extending cold water flow channel connected to the cold water inlet 1.1 and a hot water flow channel connected to the hot water inlet 1.2. The cold water flow channel on the side of the cold water inlet 1.1 forms the manual cold water flow channel 1.3, while the cold water flow channel on the other side of the cold water inlet 1.1 forms the sensor cold water flow channel 1.4. Similarly, the hot water flow channel on the side of the hot water inlet 1.2 forms the manual hot water flow channel 1.5, while the hot water flow channel on the other side of the hot water inlet 1.2 forms the sensor hot water flow channel 1.6.

The manual water outlet hole 1.7 is located on one side of the valve seat 1 where the manual water temperature adjustment valve core 2 is installed, while the sensor water outlet hole 1.8 is located on the other side of the valve seat 1 where the sensor water temperature adjustment valve core 3 is installed. The water from the manual cold water flow channel 1.3 and manual hot water flow channel 1.5 is mixed in the manual mixing chamber and then outputted to the manual water outlet hole 1.7, while the water from the sensor cold water flow channel 1.4 and sensor hot water flow channel 1.6 is mixed in the sensor mixing chamber and then outputted to the sensor water outlet hole 1.8.

The manual water outlet hole 1.7 and the sensor water outlet hole 1.8 are both L-shaped, with the inlet axis of the manual water outlet hole 1.7 and the inlet axis of the sensor water outlet hole 1.8 horizontally arranged. This allows the inlets of the manual water outlet hole 1.7 and the sensor water outlet hole 1.8 to be located on the side of the valve body 1.9, enabling them to be matched with the manual water temperature adjustment valve core 2 and the sensor water temperature adjustment valve core 3, respectively. The outlet axis of the manual water outlet hole 1.7 and the outlet axis of the sensor water outlet hole 1.8 are vertically arranged, parallel to the axis of the cold water inlet 1.1 and the axis of the hot water inlet 1.2. This means that the outlets of the manual water outlet hole 1.7 and the sensor water outlet hole 1.8, as well as the cold water inlet 1.1 and the hot water inlet 1.2, are all located on the bottom surface of the valve body 1.9, making it convenient to discharge water through pipelines.

The faucet body 8 is also equipped with a manual temperature adjustment knob 4 connected to the manual water temperature adjustment valve core 2 and a sensor temperature adjustment knob 5 connected to the sensor water temperature adjustment valve core 3. The manual temperature adjustment knob 4 rotates to adjust the manual water temperature adjustment valve core 2, while the manual temperature adjustment knob 4 moves to adjust the position of the manual water temperature adjustment valve core 2. The sensor temperature adjustment knob 5 rotates to adjust the sensor water temperature adjustment valve core 3. The manual temperature adjustment knob 4 is located on the left side of the faucet body 8, while the sensor temperature adjustment knob 5 is also located on the left side of the faucet body 8. The infrared sensor 7 is located on the front side of the faucet bend pipe 9.

The faucet body 8 includes a faucet seat 8.1, a left mounting portion 8.2 located on the left side of the faucet seat 8.1, and a right mounting portion 8.3 located on the right side of the faucet seat 8.1. During installation, the valve seat 1 is first placed inside the faucet seat body. The manual water temperature adjustment valve core 2 is then installed in the left mounting portion 8.2 and matched with the manual mixing chamber of the valve seat 1, while the sensor water temperature adjustment valve core 3 is installed in the right mounting portion 8.3 and matched with the sensor mixing chamber of the valve seat 1. This allows for screw-free installation of the valve seat 1.

An electromagnetic valve is also provided between the sensor water outlet hole 1.8 and the water outlet nozzle 6. The infrared sensor 7 controls the operation of the electromagnetic valve 10 by receiving signals. In this embodiment, when a user is within the sensing range of the infrared sensor 7, the infrared sensor 7 detects the signal and activates or deactivates the electromagnetic valve 10, thereby controlling the water flow of the faucet.

A connecting tee 11 is provided between the manual water outlet hole 1.7, the sensor water outlet hole 1.8, and the water outlet nozzle 6. In this embodiment, the connecting tee 11 is a three-way pipe with a first inlet, a second inlet, and a main outlet. The manual water outlet hole 1.7 is connected to the first inlet through a manual water pipe 15, while the sensor water outlet hole 1.8 is connected to the second inlet through a sensor water pipe 16. The main outlet is connected to the water outlet nozzle 6 through a main water pipe. The electromagnetic valve 10 is installed at the outlet. The water from the manual water outlet hole 1.7 and the sensor water outlet hole 1.8 is directed through the connecting tee 11 and then outputted to the water outlet nozzle 6, saving space. In this embodiment, the main water pipe is a braided flexible hose, and the water outlet nozzle 6 is movably installed at the end of the faucet bend pipe 9. A counterweight lead block 12 is also provided on the main water pipe, allowing for the movement and extension of the water outlet nozzle 6 for easy use.

The front side of the faucet bend pipe 9 is equipped with a sensor port 9.1. In this embodiment, the faucet bend pipe 9 consists of a straight pipe section and a curved pipe section, with the sensor port 9.1 located on the straight pipe section. The infrared sensor 7 is fixed inside the faucet bend pipe 9 through a fixing cover, which includes a front fixing cover 7.2 and a rear fixing cover 7.3. The front fixing cover 7.2 has an installation groove 7.21 that matches the infrared sensor 7, and the infrared sensor 7 is fixed inside the installation groove 7.21. The rear fixing cover 7.3 has screw holes with pre-installed screws, and the faucet bend pipe 9 has operating holes that match the screws. The size of the operating holes is smaller than the size of the screws. When the infrared sensor 7 is installed on the faucet bend pipe 9 through the fixing cover, the sensing area of the infrared sensor 7 protrudes through the sensor port 9.1, allowing it to detect user gestures. The position of the screws matches the position of the operating holes, and by manipulating the screws through the operating holes, the screws are moved to make contact with the inner wall of the faucet bend pipe 9.

During assembly, the infrared sensor 7 is first installed into the installation groove 7.21 of the front fixing cover 7.2. Then, the front fixing cover 7.2 is placed inside the faucet bend pipe 9, aligning the sensing area of the infrared sensor 7 with the position of the sensor port 9.1. The rear fixing cover 7.3, which has pre-installed screws, is then inserted into the faucet bend pipe 9, ensuring that the front fixing cover 7.2 and the rear fixing cover 7.3 match each other, and that the position of the screw holes corresponds to the position of the operating holes. By manipulating the screws through the operating holes, the screws are moved to make contact with the inner wall of the faucet bend pipe 9, providing a counterforce that pushes the rear fixing cover 7.3 towards the front fixing cover 7.2, and the front fixing cover 7.2 against the inner wall of the faucet bend pipe 9, thereby securing the front fixing cover 7.2 and the rear fixing cover 7.3 inside the faucet bend pipe 9 and fixing the infrared sensor 7. Once the infrared sensor 7 is installed inside the faucet bend pipe 9, it can be inserted into the fixing bolt 7.1 on the faucet body 8.

In addition, the overall shape of the fixing cover is tapered, with the upper end dimensions of the front fixing cover 7.2 and the rear fixing cover 7.3 being smaller than the lower end dimensions, facilitating the insertion of the fixing cover into the faucet bend pipe 9.

The faucet body 8 also has a fixing bolt 7.1 on the valve seat 1, with the bottom end of the fixing bolt 7.1 positioned on the valve seat 1 inside the faucet body 8, and the top end extending into the faucet bend pipe 9 and into the fixing cover, providing additional stability to the fixing cover installation.

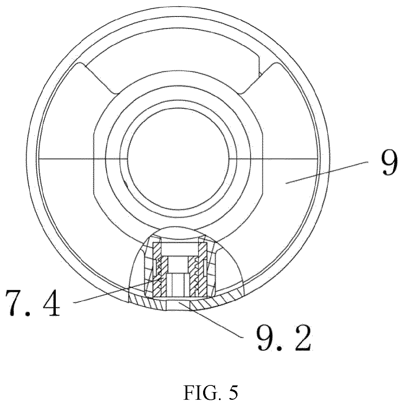

In the embodiment, as shown in FIG. 5, the first valve seat 1.10 and the second valve seat 1.11 are located at the same height, i.e., they are symmetrically distributed relative to the valve body 1.9, as shown in FIG. 1. In a faucet using this valve seat 1, the sensor temperature adjustment knob 5 and the manual temperature adjustment knob 4 are located at the same height.

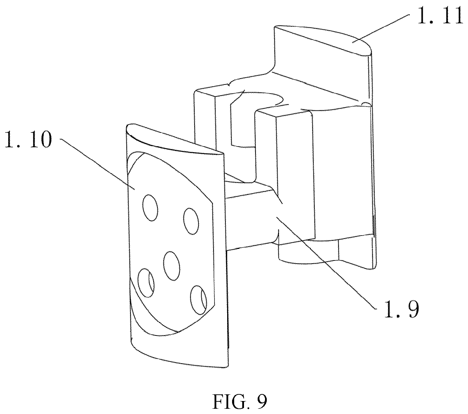

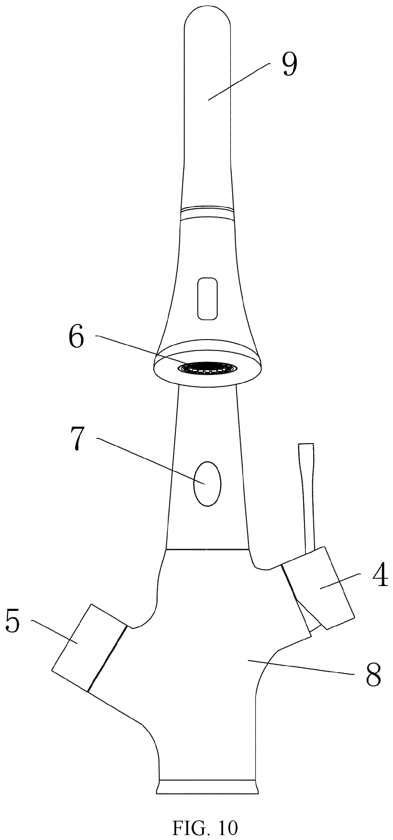

In another embodiment, as shown in FIG. 9, the first valve seat 1.10 and the second valve seat 1.11 are located at different heights, i.e., they are staggered vertically, as shown in FIG. 10. In a faucet using this valve seat 1 structure, the sensor temperature adjustment knob 5 and the manual temperature adjustment knob 4 are located at different heights, staggered vertically.

The present application provides a manual and sensor integrated kitchen faucet. By setting the manual water outlet temperature adjustment valve core 2 and the sensor water outlet temperature adjustment valve core 3 on the valve seat 1, and setting the manual cold water channel 1.3, manual hot water channel 1.5, sensor cold water channel 1.4, and sensor hot water channel 1.6, cold water enters through the cold water inlet 1.1, then flows into the manual water outlet temperature adjustment valve core 2 through the manual cold water channel 1.3, and enters the sensor water outlet temperature adjustment valve core 3 through the sensor cold water channel 1.4. Hot water enters through the hot water inlet 1.2, then flows into the manual water outlet temperature adjustment valve core 2 through the manual hot water channel 1.5, and enters the sensor water outlet temperature adjustment valve core 3 through the sensor hot water channel 1.6. The manual water outlet temperature adjustment valve core 2 and the sensor water outlet temperature adjustment valve core 3 control the proportion of cold water and hot water to achieve temperature adjustment. When a manual water outlet is desired, the manual control valve core is activated, allowing the manual water outlet hole 1.7 to communicate with the water outlet nozzle 6 for water discharge. When the sensor water outlet is desired, the infrared sensor 7 receives the sensor signal and controls the solenoid valve 10 to open, allowing the sensor water outlet hole 1.8 to communicate with the water outlet nozzle 6 for water discharge. The overall structure is compact, easy to install and use, and has temperature adjustment functionality while accommodating both manual and sensor water outlet modes.

A method for controlling a manual and automatic integrated kitchen faucet comprises the following steps:
Dividing the cold water and hot water into two paths through the valve seat 1, with one path directing cold water and hot water to the manual water outlet temperature adjustment valve core 2, and the other path directing cold water and hot water to the sensor water outlet temperature adjustment valve core 3.

In manual mode, manually operate the manual water outlet temperature adjustment valve core 2 to open the manual mixing chamber, allowing the mixed cold water and hot water to flow out through the water outlet nozzle 6. The water temperature is adjusted by rotating the manual water outlet temperature adjustment valve core 2 to control the proportion of cold water and hot water.

In sensor mode, the infrared sensor 7 receives a sensor signal, and the solenoid valve 10 opens based on the sensor signal. The sensor mixing chamber mixes the cold water and hot water, which then flows out through the water outlet nozzle 6. The water temperature is adjusted by rotating the sensor water outlet temperature adjustment valve core 3 to control the proportion of cold water and hot water.

The above-described embodiments are merely preferred embodiments of the present application. Therefore, any equivalent changes or modifications made to the structure, features, and principles described in the claims of the present application are included within the scope of the present application.

## Claims

1. A manual and sensor integrated kitchen faucet, comprising a valve seat, a water outlet nozzle, and an infrared sensor, wherein the valve seat is provided with a separate cold water inlet and a hot water inlet for respectively connecting cold water and hot water, wherein the valve seat is installed with a manual water temperature adjustment valve core and a sensor water temperature adjustment valve core, the valve seat is provided with a manual water outlet hole in cooperation with the manual water temperature adjustment valve core and a sensor water outlet hole in cooperation with the sensor water temperature adjustment valve core, the manual water temperature adjustment valve core mixes the water discharged from the cold water inlet and hot water inlet and outputs the water to the manual water outlet hole, the sensor water temperature adjustment valve core mixes the water discharged from the cold water inlet and hot water inlet and outputs it to the sensor water outlet hole, the manual water outlet hole and the sensor water outlet hole are respectively connected to the water outlet nozzle, and an electromagnetic valve is further provided between the sensor water outlet hole and the water outlet nozzle, the infrared sensor receives signals and controls the operation of the electromagnetic valve.

2. The manual and sensor integrated kitchen faucet according to claim 1, wherein the valve seat comprises a valve body, a first valve seat located on one side of the valve body, and a second valve seat located on the other side of the valve body, the cold water inlet and hot water inlet are set on the valve body, the manual water temperature adjustment valve core is installed on the first valve seat, and the sensor water temperature adjustment valve core is installed on the second valve seat.

3. The manual and sensor integrated kitchen faucet according to claim 2, wherein the valve body is provided with a manual cold water flow channel communicating with the manual water temperature adjustment valve core and the cold water inlet, a sensor cold water flow channel communicating with the sensor water temperature adjustment valve core and the cold water inlet, a manual hot water flow channel communicating with the manual water temperature adjustment valve core and the hot water inlet, and a sensor hot water flow channel communicating with the sensor water temperature adjustment valve core and the hot water inlet, the manual water temperature adjustment valve core mixes the water flowing out from the manual cold water flow channel and manual hot water flow channel, and the sensor water temperature adjustment valve core mixes the water flowing out from the sensor cold water flow channel and sensor hot water flow channel.

4. The manual and sensor integrated kitchen faucet according to claim 3, wherein the manual cold water flow channel, the sensor cold water flow channel, the manual hot water flow channel, and the sensor hot water flow channel are horizontally arranged, and the cold water inlet, the hot water inlet, the manual water outlet hole, and the sensor water outlet hole are vertically arranged.

5. The manual and sensor integrated kitchen faucet according to claim 2, wherein the valve seat is integrally formed.

6. The manual and sensor integrated kitchen faucet according to claim 1, further comprising a faucet body and a faucet bend pipe positioned above the faucet body, wherein the valve seat is installed inside the faucet body, the manual water temperature adjustment valve core is positioned on one side of the faucet body, and the sensor water temperature adjustment valve core is positioned on the other side of the faucet body, a sensing area on the infrared sensor is positioned on the front side of the faucet bend pipe, and the front side of the faucet bend pipe is provided with a sensing port.

7. The manual and sensor integrated kitchen faucet according to claim 6, wherein the infrared sensor is installed inside the faucet bend pipe through a fixing cover, the fixing cover is pre-installed with fastening screws, the faucet bend pipe is provided with an operating hole that matches the fastening screws, the size of the operating hole is smaller than the size of the fastening screws, when the infrared sensor is installed on the faucet bend pipe through the fixing cover, the sensing area of the infrared sensor is exposed through the sensing port, the position of the fastening screws matches the position of the operating hole, and the fastening screws are moved by operating the operating hole to make contact with the inner wall of the faucet bend pipe.

8. A control method for the manual and sensor integrated kitchen faucet according to any one of claims 1 to 7, comprising:
dividing cold water and hot water into two paths through the valve seat, with one path of cold water and hot water flowing to the manual water temperature adjustment valve core and the other path of cold water and hot water flowing to the sensor water temperature adjustment valve core,
in a manual mode, manually operating the manual water temperature adjustment valve core to open the manual mixing chamber, and the mixed cold water and hot water flowing out from the water outlet nozzle;
in a sensor mode, the infrared sensor receiving a sensing signal, the electromagnetic valve opening based on the sensing signal, and the mixed cold water and hot water flowing out from the water outlet nozzle.

## Amended claims

### Amended claims under Art. 19.1 PCT

1. A manual and sensor integrated kitchen faucet, comprising a valve seat, a water outlet nozzle, and an infrared sensor, wherein the valve seat is provided with a separate cold water inlet and a hot water inlet for respectively connecting cold water and hot water, wherein the valve seat is installed with a manual water temperature adjustment valve core and a sensor water temperature adjustment valve core, the valve seat is provided with a manual water outlet hole in cooperation with the manual water temperature adjustment valve core and a sensor water outlet hole in cooperation with the sensor water temperature adjustment valve core, the manual water temperature adjustment valve core mixes the water discharged from the cold water inlet and hot water inlet and outputs the water to the manual water outlet hole, the sensor water temperature adjustment valve core mixes the water discharged from the cold water inlet and hot water inlet and outputs it to the sensor water outlet hole, the cold water inlet, the hot water inlet, the manual water outlet hole, and the sensor water outlet hole are vertically arranged, the manual water outlet hole and the sensor water outlet hole are respectively connected to the water outlet nozzle, and an electromagnetic valve is further provided between the sensor water outlet hole and the water outlet nozzle, the infrared sensor is configured inside a faucet bend pipe and controls the solenoid valve by receiving signals.

2. The manual and sensor integrated kitchen faucet according to claim 1, wherein the valve seat comprises a valve body, a first valve seat located on one side of the valve body, and a second valve seat located on the other side of the valve body, the cold water inlet and hot water inlet are set on the valve body, the manual water temperature adjustment valve core is installed on the first valve seat, and the sensor water temperature adjustment valve core is installed on the second valve seat.

3. The manual and sensor integrated kitchen faucet according to claim 2, wherein the valve body is provided with a manual cold water flow channel communicating with the manual water temperature adjustment valve core and the cold water inlet, a sensor cold water flow channel communicating with the sensor water temperature adjustment valve core and the cold water inlet, a manual hot water flow channel communicating with the manual water temperature adjustment valve core and the hot water inlet, and a sensor hot water flow channel communicating with the sensor water temperature adjustment valve core and the hot water inlet, the manual water temperature adjustment valve core mixes the water flowing out from the manual cold water flow channel and manual hot water flow channel, and the sensor water temperature adjustment valve core mixes the water flowing out from the sensor cold water flow channel and sensor hot water flow channel.

4. The manual and sensor integrated kitchen faucet according to claim 3, wherein the manual cold water flow channel, the sensor cold water flow channel, the manual hot water flow channel, and the sensor hot water flow channel are horizontally arranged.

5. The manual and sensor integrated kitchen faucet according to claim 2, wherein the valve seat is integrally formed.

6. The manual and sensor integrated kitchen faucet according to claim 1, further comprising a faucet body and a faucet bend pipe positioned above the faucet body, wherein the valve seat is installed inside the faucet body, the manual water temperature adjustment valve core is positioned on one side of the faucet body, and the sensor water temperature adjustment valve core is positioned on the other side of the faucet body, a sensing area on the infrared sensor is positioned on the front side of the faucet bend pipe, and the front side of the faucet bend pipe is provided with a sensing port.

7. The manual and sensor integrated kitchen faucet according to claim 6, wherein the infrared sensor is installed inside the faucet bend pipe through a fixing cover, the fixing cover is pre-installed with fastening screws, the faucet bend pipe is provided with an operating hole that matches the fastening screws, the size of the operating hole is smaller than the size of the fastening screws, when the infrared sensor is installed on the faucet bend pipe through the fixing cover, the sensing area of the infrared sensor is exposed through the sensing port, the position of the fastening screws matches the position of the operating hole, and the fastening screws are moved by operating the operating hole to make contact with the inner wall of the faucet bend pipe.

8. A control method for the manual and sensor integrated kitchen faucet according to any one of claims 1 to 7, comprising:
dividing cold water and hot water into two paths through the valve seat, with one path of cold water and hot water flowing to the manual water temperature adjustment valve core and the other path of cold water and hot water flowing to the sensor water temperature adjustment valve core,
in a manual mode, manually operating the manual water temperature adjustment valve core to open the manual mixing chamber, and the mixed cold water and hot water flowing out from the water outlet nozzle;
in a sensor mode, the infrared sensor receiving a sensing signal, the electromagnetic valve opening based on the sensing signal, and the mixed cold water and hot water flowing out from the water outlet nozzle.
